# EUROPÄISCHE PATENTSCHRIFT

(11) **EP 1 728 770 B1**
(45) Veröffentlichungstag und Bekanntmachung des Hinweises auf die Patenterteilung: **23.07.2008**
(21) Anmeldenummer: 06008720.2
(22) Anmeldetag: 27.04.2006
(51) Int. Cl.: C03C 23/00, C03C 17/00, B41M 5/26

(54) **Verfahren zur Markierung von Objektoberflächen**
Process for marking the surface of articles
Procédé pour le marquage des surfaces d'objets

(30) Priorität: 03.06.2005 DE 102005026038
(43) Veröffentlichungstag der Anmeldung: 06.12.2006
(73) Patentinhaber: BoRaGlas GmbH, 06120 Halle/Saale (DE)
(72) Erfinder: Rainer, Thomas, Dr., 38855 Wernigerode (DE); Berg, Klaus-Jürgen, Dr., 06130 Halle (DE); Redmann, Dr. Frank, 06114 Halle (DE)

(56) Entgegenhaltungen:
- EP-A2- 1 110 660
- US-A1- 2003 071 020
- US-B1- 6 177 151
- TANAHASHI ET AL: "Effects of heat treatment on Ag particle growth and optical properties in Ag/SiO2 glass composite thin films" JOURNAL OF MATERIALS RESEARCH, Bd. 10, Nr. 2, Februar 1995 (1995-02), Seiten 362-365, XP002417063
- HAYASHI M ET AL: "ELECTROLUMINESCENCE FROM CDSE MICROCRYSTALS-DOPED INDIUM TIN OXIDE THIN FILMS" JOURNAL OF MATERIALS SCIENCE, SPRINGER / BUSINESS MEDIA, DORDRECHT, NL, Bd. 33, Nr. 19, 1. Oktober 1998 (1998-10-01), Seiten 4829-4833, XP000791551 ISSN: 0022-2461
- NIKOLAEVA M ET AL: "Ion beam assisted formation of Ag nanoparticles in SiO2 and their optical properties" NUCLEAR INSTRUMENTS & METHODS IN PHYSICS RESEARCH, SECTION - B: BEAM INTERACTIONS WITH MATERIALS AND ATOMS, ELSEVIER, AMSTERDAM, NL, Bd. 193, Nr. 1-4, Juni 2002 (2002-06), Seiten 867-870, XP004367424 ISSN: 0168-583X
- NASU H ET AL: "Influence of matrix on third order optical nonlinearity for semiconductor nanocrystals embedded in glass thin films prepared by Rf-sputtering" JOURNAL OF NON-CRYSTALLINE SOLIDS, NORTH-HOLLAND PHYSICS PUBLISHING. AMSTERDAM, NL, Bd. 351, Nr. 10-11, 15. April 2005 (2005-04-15), Seiten 893-899, XP004844756 ISSN: 0022-3093

## Beschreibung

Die Erfindung betrifft ein Verfahren zur Markierung von Objektoberflächen.

Die Markierung von Objekten ist in vielfältiger Form im Stand der Technik bekannt. Bekannte Verfahren (DE 4126626, DE 4407547, DE 19855623) zur Kennzeichnung von Glas nutzen z.B. die Erzeugung von Mikrorissen im Inneren des Glases durch Ausnutzung nicht-linearer Prozesse im Fokusbereich von Laserstrahlung, für die das Glas transparent ist. Die Mikrorisse streuen und absorbieren Licht aus dem sichtbaren Spektralbereich und sind dadurch für den Menschen sichtbar. Diese Verfahren schwächen aufgrund der lokalen Rißbildung die mechanische Stabilität und sind deshalb, insbesondere bei sehr dünnen Gläsern, nicht vorteilhaft.

Keine mechanischen Beschädigungen treten bei der Methode der farbigen lonenbeschriftung auf, bei der durch lokal begrenzte Erwärmung des Glases infolge Absorption von Laserstrahlung Nanopartikel aus Gold, Silber oder Kupfer innerhalb des Glases erzeugt werden. Sie färben das Glas rot (Gold und Kupfer) bzw. im Falle von Silber gelb. Nachteil dieser Verfahren ist, dass sie nur bei Gläsern angewendet werden können, in die schon beim Erschmelzen Gold-, Silber- oder Kupferionen eingebaut wurden (Offenlegungsschrift DE 19841547 A1) oder in denen in einem zusätzlichen Verfahrensschritt vor der Laserbestrahlung mittels lonenaustausch Na-lonen der Glasoberfläche durch Silber- oder Kupferionen einer mit der Glasoberfläche in Kontakt befindlichen Salzschmelze ersetzt wurden. In beiden Fällen müssen darüber hinaus im Glas Ionen enthalten sein, die bei thermischer Einwirkung das ionische Gold, Silber oder Kupfer zu Atomen reduzieren, bevor diese sich wegen ihrer geringen Löslichkeit im Glas als Nanopartikel ausscheiden.

In der Offenlegungsschrift DE 10119302 A1 wird beschrieben, wie der zusätzliche Verfahrensschritt vor der Einwirkung der Laserstrahlung dadurch vermieden werden kann, dass der zu beschriftende Teil der Glasoberfläche während des Einwirkens der Laserstrahlung Kontakt mit einem Spendermedium für Silber- oder Kupferionen hat. Die zur Erzeugung der die Glasfärbung hervorrufenden metallischen Nanopartikel notwendigen Prozesse lonenaustausch und Diffusion von Silber- oder Kupferionen in das Glas, deren Reduktion zu Atomen und die Aggregation zu Nanopartikeln finden dann quasi alle gleichzeitig während der Einwirkung der Laserstrahlung statt.

In der Offenlegungsschrift DE 102 50 408 A1 werden als Spendermedien für Silberionen Beschichtungen empfohlen, und deren Zusammensetzung sowie Verfahren zur Herstellung der Beschichtungszusammensetzung und zur Beschichtung angegeben. Die beschriebenen Zusammensetzungen enthalten zumindest eine Silberverbindung, die in einem wässrigen und/oder organischen Lösungsmittel löslich ist und mindestens ein Bindemittel. Das Auftragen der Schicht und das notwendige Abwaschen nach Beendigung der Laserbestrahlung bleiben ein Nachteil, wenn auch ein weniger gravierender als der komplette Verfahrensschritt lonenaustausch mittels Salzschmelzen.

In DE 101 62 111 wird ein Verfahren beschrieben, bei dem außer der Laserbestrahlung keine weiteren Schritte erforderlich sind, um in einem durchsichtigen Bauteil eine dauerhafte Markierung anzubringen. Die Markierung weist dabei einen Abstand von der Oberfläche auf und besteht in dem mechanisch nicht geschädigten Material nur aus einer Zone mit gegenüber dem Ausgangszustand veränderter komplexer Brechzahl, die durch optische Verfahren inklusive des nackten Auges nachgewiesen werden kann. Die Veränderungen der komplexen Brechzahl werden dabei durch nicht-lineare optische Effekte der Anregung bei hoher Leistungsdichte im Fokus eines Laserstrahles, der aus ultrakurzen Impulsen besteht, erzeugt. Eingesetzt wird dazu z.B. ein Ti:Saphir-Laser.

US 6,177,151 und EP 1 110 660 beschreiben ein Verfahren, wobei ein Träger mit einen metallischen Schicht durch laserbestrahlung auf einem substrat niedergeschlagen wird.

Aufgabe der Erfindung ist es, ein Verfahren zur Markierung beliebiger auch nicht transparenter Objektoberflächen bereitzustellen, bei dem keine besonderen ergänzenden Anforderungen an das zu markierende Material gestellt werden.

Diese Aufgabe wird dadurch gelöst, dass in Kontakt oder in einem Abstand zur Objektoberfläche ein Trägerelement angeordnet wird, welches auf seiner zur Objektoberfläche weisenden Seite wenigstens eine in andere Schichten eingebettete Metallschicht trägt, insbesondere wobei die Schichten ein Low-E-Schichtsystem ausbilden, dass ein insbesondere fokussierter Laserstrahl auf das Schichtsystem gerichtet wird und dass aufgrund der Laserstrahleinstrahlung Material aus dem Schichtsystem auf die zu markierende Objektoberfläche übertragen wird und dort haftet als Matrix mit metallischen Nanopartikeln, wobei die Matrix aus den ursprünglich in den Schichten des Schichtsystems vorliegenden Substanzen gebildet ist. Hierbei ist es nicht zwingend, dass die Matrix alle Substanzen umfasst, die in den die wenigstens eine Metallschicht umgebenden Schichten vorhanden sind.

Bei der Bestrahlung eines Schichtsystems, in welches eine Metallschicht eingebettet ist, wird in dem Schichtsystem eine farbige Markierung erzeugt, die hervorgerufen wird durch einen Prozess, bei dem in dem Schichtsystem eine Ansammlung von Metall-Nanopartikeln gebildet wird, die in eine Matrix aus den Substanzen der die ursprüngliche Metallschicht umgebenden Schichten eingebettet ist.

Neben dieser Bildung einer solchen Markierung durch Ansammlung im Schichtsystem kann diese Markierung bzw. zumindest ein Teil dieser Ansammlung auch auf eine mit dem Schichtsystem kontaktierte oder mit Abstand unmittelbar davorliegende andere beliebige Oberfläche übertragen werden.

Das Trägerelement kann z.B. eine sogenannte Low-E-Schicht aufweisen. Solche Schichten sind ideal für die Durchführung des Verfahrens geeignet, da sie Metallschichten aufweisen, die in anderen Schichten eingebettet sind, wobei die anderen Schichten im wesentlichen Schutz- und Entspiegelungsfunktion aufweisen. Für diese Anwendungen kommen z.B. Zinndioxid, Zinkoxid, Wismutdioxid, Indium(III)-Oxid in Frage. Aus diesen Materialien können dementsprechend die Matrixmaterialien gebildet werden.

Low-E-Schichten und -Schichtsysteme besitzen bei hoher Transmission im sichtbaren Teil des Spektrums im infraroten Spektralbereich eine hohe Reflexion und damit verbundene niedrige Emissivität (low-E: low emissitivity). Dadurch wirken sie als gute Reflektoren für Wärmestrahlung bei Raumtemperatur und verleihen Glas und durchsichtigen Polymerfolien eine sehr gute Wärmedämmung, die sie ohne eine solche Beschichtung nicht hätten. Typische Vertreter sind Schichten aus In₂O₃:Sn(ITO) und silberbasierte Mehrschichtsysteme.

Im Architekturglasbereich dominieren Schichtsysteme. Meistens bildet eine nur etwa 10 nm dicke Silberschicht die funktionelle Basis und um die Transparenz des Glases im sichtbaren Spektralbereich zu erhalten, wird das Silber durch Einbettung in hochbrechende Oxide für diese Wellenlängen entspiegelt. Dafür werden meist Zinndioxid, aber auch Zinkoxid, Wismutdioxid oder Indium(III)-Oxid verwendet. Zusätzlich sind sogenannte Blockerschichten erforderlich, die eine Korrosion der Silberschicht verhindern und fast immer schließen Deckschichten zur Erhöhung der Kratzfestigkeit das Schichtsystem nach außen ab.

Die Herstellung des Schichtsystems erfolgt durch Magnetronsputtern im Vakuum, wobei Floatglasformate in Herstellungsbreite von 3,21 m und 6 m Länge auf der sogenannten Feuer- oder Atmosphärenseite beschichtet werden. Auf ähnliche Weise werden Polyethylenterephtalat (PET)-Folien mit Dicken zwischen 25 und 100 µm und Größen von z. B. 2,15 m Breite und 9 m Länge beschichtet.

Bezogen auf Low-E-Schichten als bevorzugte Variante des erfindungsgemäßen Verfahrens muss nur das Low-E-Schichtsystem mit dem Substrat in Kontakt oder im Abstand unmittelbar davon gebracht werden und die Laserbestrahlung dann auf das Schichtsystem gerichtet werden, insbesondere durch das Trägermaterial des Low-E-Schichtsystems, also z.B. Floatglas oder PET-Folie, hindurch..

Ist das zu beschichtende Objekt bei der Laserwellenlänge absorptionsfrei bzw. genügend schwach absorbierend, kann die Laserstrahlung auch durch das Objekt hindurch auf das Low-E-Schichtsystem gerichtet werden. Für manche Zwecke kann es auch nützlich sein, dass der unmittelbare Kontakt von Low-E-Schichtsystem und Substrat nicht erforderlich ist.

Selbst bei 150 µm Abstand werden Strukturen übertragen, die nur unwesentlich an Schärfe gegenüber dem "Original" auf dem Low-E-Schichtsystem verloren haben. Bei direktem Kontakt ist in dieser Hinsicht praktisch kein Unterschied zwischen "Original" und übertragener Struktur feststellbar.

Ein besonderer Vorteil ergibt sich bei Verwendung von Schichtsystemen auf dem Trägermaterial PET-Folie von z.B. nur 25 - 100 µm Dicken, da die Strukturen damit auch auf gekrümmte Festkörperoberflächen übertragbar sind.

Ursache für die Entstehung der Farbstrukturen auf dem Low-E-Schichtsystem ist die Absorption der Laserstrahlung in wenigstens einer Metallschicht, z.B einer Silberschicht, die dadurch so stark erwärmt wird, dass es im bestrahlten Bereich zu einer Veränderung des Schichtsystems kommt. Als Folge der Veränderung liegt das Metall, z.B. Silber, in Form von Nanopartikeln vor, eingebettet in eine Matrix, gebildet zumindest teilweise aus den ursprünglich in den Schichten vorliegenden Substanzen des Schichtsystems.

Solche eingebetteten Nanopartikel aus Metall, z.B. Silber, zeigen eine Färbung, die von der Partikelgröße, -konzentration und -verteilung sowie Brechzahl des entstandenen Matrixmaterials abhängt. Bei hohen Partikelkonzentrationen kann zusätzlich eine selektive Reflexion im sichtbaren Spektralbereich beobachtet werden. Alle genannten Größen hängen im vorliegenden Fall von den Bestrahlungsbedingungen und dem konkreten Aufbau des Schichtsystems ab. Die Farbe der bestrahlten Bereiche in Transmission kann auf diese Weise zwischen hellgelb und dunkelbraun variiert werden. Bei schräger Beobachtung der bestrahlten Bereiche dominiert die Reflexionswirkung und sie haben dann das Aussehen aufgedampfter Metallschichten.

Die Erzeugung von metallischen Nanopartikeln, aus wenigstens einer zusammenhängenden Metallschicht, noch dazu in einem einzigen sehr kurzen Verfahrensschritt unter Verwendung von Laserstrahlung ist bisher in der Literatur nicht beschrieben und war auf Grund der bekannten Herstellungsverfahren nicht zu erwarten.

Bei dem Verfahren ergibt es sich, dass parallel zur farbgebenden Partikelbildung in dem Low-E-Schichtsystem Material "gerichtet" verdampft und sich als metallpartikelhaltige Matrix in nahezu gleicher Zusammensetzung wie die, die auf dem Trägermaterial des Low-E-Schichtsystems zurückbleibt, auch auf sehr unterschiedlichen Substraten, wie z.B. Glas, Keramik oder Aluminium, abscheidet und dauerhaft haftet.

Die Schichtdicke der farbigen Strukturen bzw Markierung hängt von den Bestrahlungsbedingungen ab und liegt in der Größenordnung von 30 nm. Wie auf einem silberbasierten Low-E-System selbst können auf durchsichtigen Substraten durch Variation der Bestrahlungsbedingungen Farben zwischen hellgelb und dunkelbraun erzeugt werden und auch hier dominiert bei schräger Beobachtung der bestrahlten Bereiche die Reflexion, so dass sie wie aufgedampfte Metallschichten aussehen. Auf undurchsichtigen Substraten wird der Eindruck der farbigen Strukturen wesentlich durch die Farbe und Rauhigkeit des Substrates mitbestimmt.

Die durch Laserbestrahlung auf Festkörperoberflächen übertragenen farbigen Strukturen sind stabil gegenüber Wasser, üblichen Haushaltschemikalien und Lösungsmitteln sowie UV-Strahlung, auch bei sehr langen Einwirkungszeiten. Sie widerstehen Temperaturen bis 550° C. Darüber setzt eine Farbänderung ein, ohne dass die Formen der Strukturen verändert werden.

So kann die Farbe einer auf ein zu markierendes Objekt bzw. dessen Oberfläche übertragenen Markierung auch noch nach der Übertragung in einer vorteilhaften Ausgestaltung der Erfindung geändert werden, indem das markierte Objekt einer Temperaturbehandlung unterzogen wird.

Bei einer bevorzugten Ausführungsform wird ein Strahl mit gaußförmigem Intensitätsprofil eines gepulsten Nd : YAG-Lasers auf ein in unmittelbarem Kontakt mit einer Festkörperoberfläche befindliches Low-E-Schichtsystem fokussiert. Bereits durch einen einzigen Impuls von 200 ns Dauer und einer Energie von 0,4 mJ kann eine farbige kreisförmige Fläche (Pixel), insbesondere begrenzt von einem Kreis mit einem von dem der Fläche abweichenden Farbton, erzeugt werden. Der Durchmesser kann z.B. durch den Grad der Fokussierung des Laserstrahls z.B. von weniger als 10 µm bis 100 µm variiert werden. Die Farbe lässt sich durch wiederholte Einwirkung weiterer Impulse auf die gleiche Fläche verändern.

Die farbigen Pixel lassen sich durch eine Relativbewegung zwischen Laserstrahl und Schichtsystem bzw. Objekt zu beliebigen Markierungen, Beschriftungen, dekorativen Strukturen und Halbtonbildern zusammensetzen, wobei die Strukturen auch in sich noch farbig strukturiert sein können.

Werden Flächen mit makroskopisch einheitlichem Aussehen aus einzelnen Pixeln zusammengesetzt, so kann das Aussehen durch unterschiedliche gegenseitige Anordnung der Pixel varriiert werden. Der Farbeindruck, den eine Fläche, die aus nicht überlappenden Pixeln aufgebaut ist, macht, ist ein anderer als der, den eine aus überlappenden Pixeln erzeugt.

Ähnlich lassen sich Flächen mit makroskopisch einheitlichem Aussehen aus Linien mit mehr oder weniger starkem Grad an Überlappung und dann unterschiedlichem Aussehen aufbauen. Die mikroskopisch beobachtbare Farbe der Linien wird wieder durch den Grad der Pixel-Überlappung, also von der Relativgeschwindigkeit zwischen der Festkörperoberfläche und dem Laserstrahl sowie der Impulsfolgefrequenz und ganz wesentlich von der Intensität des Strahles beeinflusst.

Es gibt Schichtsysteme, die ganz ähnlich aufgebaut sind wie die silberbasierten Low-E-Schichtsysteme, aber nicht einheitlich so genannt werden, obwohl sie auch eine sehr hohe Reflexion im infraroten Spektralbereich aufweisen. Sie sind mehr oder weniger stark gefärbt, dienen nicht vorrangig der Wärmedämmung, sondern dem Sonnenschutz und werden daher manchmal anders bezeichnet. Z.B. bringt die Firma Southwall Europe solche stärker gefärbten Schichtsysteme auf PET-Folien auf den Markt und nennt sie dann z.B. Solar-Control-Folienprodukte. Auch diese Schichtsysteme, bzw. damit versehene Trägerelemente lassen sich zur Farbstrukturierung von Festkörperoberflächen nutzen.

Grundsätzlich soll festgehalten werden, dass der Einsatz von Low-E-Schichtsystemen auf entsprechenden Trägern wie Folien oder Gläsern eine Möglichkeit in Rahmen des erfindungsgemäßen Verfahren darstellt, da derartige Schichtsysteme kommerziell einfach erhältlich sind.

Es sind für die Erfindung jedoch jegliche Schichtsysteme auf insbesondere starren oder flexiblen Trägerelementen einsetzbar, die wenigstens eine Metallschicht aufweisen, welche in weitere Schichten eingebettet sind, wie z.B. Zinndioxid, Zinkoxid, Wismutoxid etc, aus denen bei Laserstrahlbehandlung dann das Matrixmaterial gebildet wird. Hierbei können auch mehrere Schichten aus unterschiedlichen Metallen in einem Schichtsystem vorhanden sein, was insbesondere zu weiteren Farbabstufungen führen kann.

So können speziell für die Farbstrukturierung Folien oder Gläser mit Schichtsystemen versehen werden, die andere Metallschichten als Silber, z.B. Kupferschichten enthalten, und dann ebenso wie solche mit Goldschichten eine rote Farbe auf Oberflächen z.B. transparenter Festkörper erzeugen könnten.

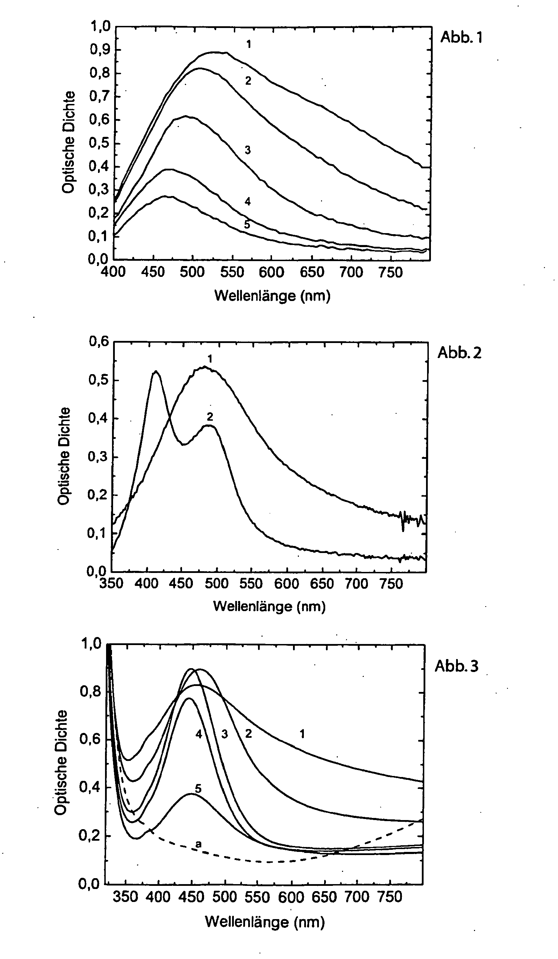

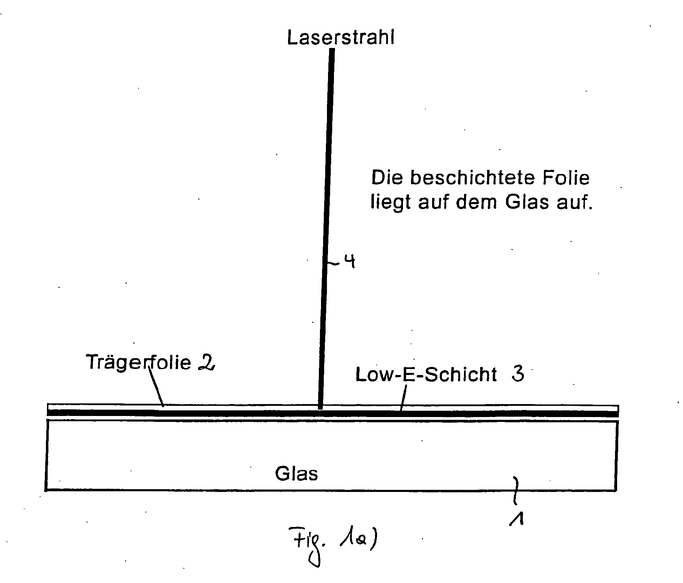

Ein Ausführungsbeispiel der Erfindung ist in der nachfolgenden Figur 1a dargestellt.

Die Figur 1a zeigt ein mit einer Markierung zu versehendes Glas 1, auf welchem ein Trägerelement 2 angeordnet ist, z.B. eine Folie, die auf der dem Glas zugewandten Seite ein Schichtsystem 3 trägt, welches wenigstens eine Metallschicht aufweist. Es handelt sich hier konkret um ein Low-E-Schichtsystem mit einer Silberschicht.

Der Laserstrahl 4 ist durch das Trägerelement hindurch auf das Schichtsystem gerichtet und wird dort in der Silberschicht absorbiert. Hierdurch entstehen Silber-Nanopartikel, die in eine Matrix, gebildet aus den übrigen Schichtmaterialien, eingebettet sind. Neben der Bildung einer solchen Ansammlung in dem Schichtsystem wird durch die Lasereinstrahlung zumindest ein Teil dieser Ansammlung auch auf die zu markierende Glasoberfläche übertragen.

Als zu markierende Materialien oder Objekte eignen sich z.B. besonders auch Aluminiumkörper, Keramik, gekrümmte Körper wie z.B. Glasampullen.

Weitere Ausführungsbeispiele, die sich im wesentlichen nur auf einen Träger mit einem Low-E-Schichtsystem beziehen, sind in den weiteren Figuren 1 bis 6 dargestellt. Die hierzu gemachten weiteren Angaben sind übertragbar auf die Markierungen, die erhalten werden, wenn von einem solchen Schichtsystem eine Markierungsübertragung auf eine beliebige Oberfläche gemäß der Erfindung durchgeführt wird.

Bei einem ersten Ausführungsbeispiel wird als Ausgangsmaterial ein Low-E-Schichtsystem benutzt, das sich auf der Atmosphärenseite einer 4 mm dicken Floatglasscheibe befindet. In dem Schichtsystem folgen ausgehend von der Glasoberfläche die nachfolgend aufgeführten Materialien mit den in Klammern angegebenen Schichtdicken, gemessen in nm, aufeinander: SnO₂ (30), ZnO (2), Ag (13), TiO₂ (2,6), SnO₂ (40).

Auf das Schichtsystem wurde Laserstrahlung der Wellenlänge 1064 nm eines gütegeschalteten Nd : YAG-Lasers fokussiert, wozu der Originalstrahl mit einem Durchmesser von 1 mm und einem gaußförmigen Intensitätsprofil nacheinander einen 1 : 4 - Strahlaufweiter und eine Sammellinse mit einer Brennweite von 30 mm durchlief. Auf diese Weise wurden deutlich voneinander getrennte Orte einem Einzelimpuls mit einer Dauer von 200 ns und einer Energie ausgesetzt, die zwischen 0,3 mJ und 12 mJ variiert wurde.

Im Ergebnis entstanden Pixel mit einem Durchmesser von etwa 100 µm. In Fig. 1 ist die mit einem Mikroskop-Spektralphotometer im zentralen Bereich der Pixel gemessene Optische Dichte als Funktion der Wellenlänge dargestellt, wobei die fortlaufende Nummerierung der Kurven wachsender Energie der Einzelimpulse entspricht.

Pixel mit diesen Eigenschaften sind gemäß der Erfindung auf beliebige Oberflächen übertragbar.

In einem weiteren Ausführungsbeispiel wurde auf einer Low-E-Scheibe der im Ausführungsbeispiel 1 beschriebenen Art wie im Ausführungsbeispiel 1 erläutert, durch einen Einzelimpuls ein farbiger Pixel erzeugt. Anschließend wurde die Scheibe einer Temperaturbehandlung von einer Stunde Dauer bei 600° C ausgesetzt. Dabei kommt es zu einer Farbänderung des Pixels, die in Fig. 2 durch die im Zentrum des Pixels mit einem Mikroskop-Spektralphotometer als Funktion der Wellenlänge gemessenen Optischen Dichte vor (Kurve 1) und nach (Kurve 2) der Wärmebehandlung dokumentiert ist.

Ein solche Farbänderung erfolgt auch bei einem Pixel, der gemäß der Erfindung auf eine beliebige Oberfläche übertragen wurde, wenn diese Oberfläche anschließend wie beschrieben wärmebehandelt wird.

Gemäß dem dritten Ausführungsbeispiel wurden auf dem im Ausführungsbeispiel 1 beschriebenen Low-E-Schichtsystem mit dem ebenfalls in diesem Ausführungsbeispiel beschriebenen Laser farbige Flächen aus einander nicht überlappenden parallelen Linien erzeugt. Die Linien entstanden bei feststehendem Laser durch eine Bewegung des Schichtsystems in der Fokusebene mit einer Geschwindigkeit von 2 mm/s bei einer Impulsfolgefrequenz von 1 kHz.

Abweichend vom ersten Ausführungsbeispiel wurden zur Fokussierung der Laserstrahlung jetzt eine Linse mit einer Brennweite von 70 mm benutzt.

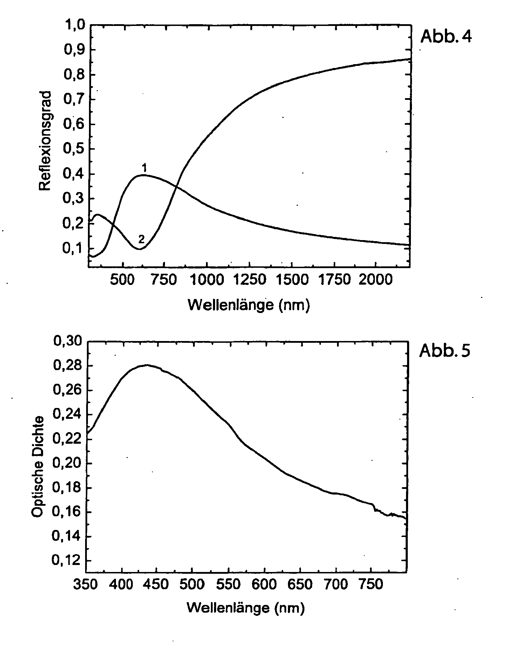

Fig. 3 zeigt eine Auswahl der an verschiedenen Flächen gemessenen Optischen Dichte als Funktion der Wellenlänge, wobei die fortlaufende Nummerierung der Kurven wieder wachsender Energie der Impulse entspricht, die zwischen 0,3 mJ und 12 mJ variiert wurde. Die strichlierte Kurve a wurde am unbehandelten Schichtsystem gemessen. In Fig. 4 ist als Beispiel die Wellenlängenabhängigkeit des Reflexionsgrades einer der verfärbten Flächen (Kurve 1) zusammen mit der des unbehandelten Schichtsystems (Kurve 2) dargestellt. Die Messung erfolgte mit unter 6° auf die beschichtete Seite des Glases auftreffendem Licht, also bei nahezu senkrechter Inzidenz.

Diese Eigenschaften treffen ebenso auf übertragene Pixel zu.

Ausgangsmaterial für das 4. Ausführungsbeispiel ist eine kommerzielle Low-E-Kunststofffolie (PET) vom Typ Heat Mirror® HM 55 der Firma Southwall Europe GmbH, bei der die funktionelle Silberschicht zur Entspiegelung im sichtbaren Spektralbereich in Indium (III)-Oxid eingebettet ist. Das Schichtsystem hatte Kontakt zur Oberfläche eines herkömmlichen Objektträgers für die Mikroskopie und wurde mit einer kommerziellen Laserbeschriftungsanlage StarMark® SMC 65 (Fa. rofin, Baasel Lasertech) mit einem lampengepumpten Nd : YAG-Laser von 65 W Nennleistung als Strahlquelle mit einer zehnstelligen Zahl mit 600 dpi Auflösung innerhalb von 12s versehen. Die einzelnen Ziffern haben eine Größe von 5,2 mm und eine Strichstärke von 0,6 mm. Fig. 5 zeigt die mit einem Mikroskop-Spektralphotometer auf einer Ziffer der auf den Objektträger übertragenen Zahl gemessene Optische Dichte als Funktion der Wellenlänge.

## Patentansprüche

1. Verfahren zur Markierung einer Objektoberfläche, **dadurch gekennzeichnet, dass**
a. in Kontakt oder in einem Abstand zur Objektoberfläche ein Trägerelement angeordnet wird, welches auf seiner zur Objektoberfläche weisenden Seite wenigstens eine in andere Schichten eingebettete Metallschicht trägt, insbesondere wobei die Schichten ein Low-E-Schicht-System ausbilden,
b. ein Laserstrahl auf das Schichtsystem gerichtet wird,
c. aufgrund der Laserstrahleinstrahlung Material aus dem Schichtsystem auf die zu markierende Objektoberfläche übertragen wird und dort haftet als Matrix mit metallischen Nanopartikeln, wobei die Matrix aus den ursprünglich in den Schichten des Schichtsystems vorliegenden Substanzen gebildet ist.

2. Verfahren nach Anspruch 1, **dadurch gekennzeichnet, dass** die Färbung der Markierung durch Auswahl des Metalles der Metallschicht gewählt wird, insbesondere wobei als Metall Silber und/oder Gold und/oder Kupfer gewählt wird.

3. Verfahren nach einem der vorherigen Ansprüche, **dadurch gekennzeichnet, dass** durch Auswahl der Bestrahlungsparameter, insbesondere von Impulsdauer, Impulsenergie, Fokussierung des Strahles und Relativgeschwindigkeit zwischen Objektoberfläche und Laserstrahl, Einfluß genommen wird auf die Größe der Metall-Nanopartikel.

4. Verfahren nach einem der vorherigen Ansprüche, **dadurch gekennzeichnet, dass** das Schichtsystem bei der Laserbestrahlung einen Abstand zur Objektoberfläche aufweist, insbesondere wobei der Abstand in einem Bereich von bis zu 200 Mikrometern gewählt wird..

5. Verfahren nach einem der vorherigen Ansprüche, **dadurch gekennzeichnet, dass** bei transparenten zu markierenden Objekten der Laserstrahl durch das Objekt und die zu markierende Objektoberfläche auf das Schichtsystem gerichtet wird.

6. Verfahren nach einem der vorherigen Ansprüche, **dadurch gekennzeichnet, dass** als Trägerelement eine Folie, insbesondere eine PET-Folie gewählt wird, insbesondere um das Trägerelement an gekrümmte Objektoberflächen anzupassen.

7. Verfahren nach einem der vorherigen Ansprüche, **dadurch gekennzeichnet, dass** Markierungen durch eine Relativbewegung zwischen Laserstrahl und Objektoberfläche erzeugt werden.

8. Verfahren nach einem der vorherigen Ansprüche, **dadurch gekennzeichnet, dass** die durch einen oder mehrere Laserpulse erzeugten Markierungen überlappend angeordnet werden, insbesondere wobei ein entstehender Farbeindruck durch den Grad der Überlappung variiert wird.

9. Verfahren nach einem der vorherigen Ansprüche, **dadurch gekennzeichnet, dass** eine markierte Objektoberfläche einer Temperaturbehandlung unterzogen wird, insbesondere um die Farbe der Markierung zu ändern.

## Claims

1. Process for marking the surface of an object, **characterized in that**
a. a support element is disposed in contact with or at a separation from the surface of the given object, the said support element carrying, on its surface that faces towards the surface of the given object, at least one metal layer that is embedded in other layers, particularly in an arrangement whereby the layers form a low-E layer system,
b. a laser beam is directed onto the layer system,
c. because of the laser irradiation, material is transferred from the layer system to the surface of the item to be marked and adheres there as a matrix of metallic nano-particles, whereby the matrix is formed from the original substances present in the layers of the layer system.

2. Process in accordance with claim 1, **characterized in that** the colouring of the marking is selected through the choice of the metal of the metal layer, particularly whereby silver and/or gold and/or copper is selected as the metal.

3. Process in accordance with one of the preceding claims, **characterized in that** the size of the metal nano-particles is influenced through selection of the irradiation parameters, particularly the pulse duration, pulse energy, focussing of the beam and the relative speed between the surface of the object and the laser beam.

4. Process in accordance with one of the preceding claims, **characterized in that** the layer system is separated from the surface of the object during laser irradiation, in particular whereby the gap is selected within a range of up to 200 µm.

5. Process in accordance with one of the preceding claims, **characterized in that**, in the case of transparent objects to be marked, the laser beam is directed through the object and the object surface to be marked and onto the layer system.

6. Process in accordance with one of the preceding claims, **characterized in that** a sheet, particularly a PET foil, in order to adapt the support element to curved surfaces of objects, is chosen as a support element.

7. Process in accordance with one of the preceding claims, **characterized in that** markings are produced through relative movement of the laser beam in relation to the surface of the object.

8. Process in accordance with one of the preceding claims, **characterized in that** the markings produced by one or more laser pulses are arranged such that they overlap each other, particularly whereby the colour effect arising is varied by means of the level of overlapping.

9. Process in accordance with one of the preceding claims, **characterized in that** a marked object surface is subjected to temperature treatment, particularly in order to change the colour of the marking.

## Revendications

1. Procédé de marquage d'une surface d'objet, **caractérisé en ce que**
a. un élément porteur est disposé en contact avec ou à distance de la surface d'objet, lequel élément porteur porte, sur sa face tournée vers la surface d'objet, au moins une couche métallique incorporée dans d'autres couches, les couches formant en particulier une couche Low-E,
b. un rayon laser est dirigé sur le système à couches,
c. suite au rayonnement laser, de la matière est transmise du système à couches sur la surface d'objet à marquer et y adhère sous forme de matrices avec des nanoparticules métalliques, la matrice étant formée à partir des substances présentes à l'origine dans les couches du système à couches.

2. Procédé selon la revendication 1, **caractérisé en ce que** la coloration du marquage est choisie par la sélection du métal de la couche métallique, l'argent et/ou l'or et/ou le cuivre étant notamment choisi comme métal.

3. Procédé selon l'une des revendications précédentes, **caractérisé en ce que** le choix des paramètres de rayonnement, en particulier de la durée d'impulsion, de l'énergie d'impulsion, de la focalisation du rayon et de la vitesse relative entre la surface d'objet et le rayon laser, influence la taille des nanoparticules métalliques.

4. Procédé selon l'une des revendications précédentes, **caractérisé en ce que** le système à couches présente une distance par rapport à la surface d'objet lors du rayonnement laser, la distance étant notamment choisie dans une plage allant jusqu'à 200 micromètres.

5. Procédé selon l'une des revendications précédentes, **caractérisé en ce que**, dans le cas d'objets à marquer transparents, le rayon laser est dirigé sur le système à couches en passant par l'objet et la surface d'objet à marquer.

6. Procédé selon l'une des revendications précédentes, **caractérisé en ce qu'**une feuille, en particulier une feuille en PET, est choisie comme élément porteur, notamment pour adapter l'élément porteur à des surfaces d'objets courbes.

7. Procédé selon l'une des revendications précédentes, **caractérisé en ce que** des marquages sont produits par un mouvement relatif entre le rayon laser et la surface d'objet.

8. Procédé selon l'une des revendications précédentes, **caractérisé en ce que** les marquages produits par une ou plusieurs impulsion(s) laser sont disposés en superposition, l'impression de couleur obtenue variant notamment par le degré de la superposition.

9. Procédé selon l'une des revendications précédentes, **caractérisé en ce qu'**une surface d'objet marquée est soumise à un traitement thermique, notamment pour modifier la couleur du marquage.
